# EUROPÄISCHE PATENTSCHRIFT

(11) **EP 1 068 118 B1**
(45) Veröffentlichungstag und Bekanntmachung des Hinweises auf die Patenterteilung: **11.09.2002**
(21) Anmeldenummer: 98965129.4
(22) Anmeldetag: 17.12.1998
(51) Int. Cl.: B60T 8/36, B60T 13/66

(54) **ABSPERRVENTIL MIT DRUCKBEGRENZUNGSFUNKTION, INSBESONDERE FÜR SCHLUPFGEREGELTE HYDRAULISCHE BREMSANLAGEN VON KRAFTFAHRZEUGEN**
CHECK VALVE WITH A PRESSURE CONTROL FUNCTION, ESPECIALLY FOR ANTISKID HYDRAULIC BRAKE SYSTEMS OF MOTOR VEHICLES
SOUPAPE D'ARRET AVEC FONCTION DE LIMITATION DE PRESSION, NOTAMMENT POUR SYSTEMES DE FREINAGE HYDRAULIQUES A ANTIBLOCAGE UTILISES DANS DES VEHICULES AUTOMOBILES

(30) Priorität: 08.04.1998 DE 19815778
(43) Veröffentlichungstag der Anmeldung: 17.01.2001
(73) Patentinhaber: ROBERT BOSCH GMBH, 70442 Stuttgart (DE)
(72) Erfinder: SCHNALZGER, Günther, D-87544 Blaichach (DE); ZIMMERMANN, Peter, D-87527 Sonthofen (DE); MÜLLER, Robert, D-67544 Blaichach (DE)
(86) Internationale Anmeldenummer: DE9803713
(87) Internationale Veröffentlichungsnummer: WO99052757

(56) Entgegenhaltungen:
- DE-A- 4 028 447
- DE-A- 4 102 626
- DE-A- 4 142 004
- DE-A- 4 142 005
- DE-A- 4 234 749
- DE-A- 19 504 246

## Beschreibung

### Stand der Technik

Die Erfindung geht aus von einem Absperrventil nach der Gattung des Patentanspruchs 1.

Es ist schon ein solches Absperrventil für hydraulische Bremsanlagen von Kraftfahrzeugen bekannt (DE 40 41 506 C2), bei dem der Stößel aus der Schließstellung des Sitzventils heraus entgegen der Kraft der Druckfeder in den Anker eintaucht, wenn der Ansprechdruck zum Wirksammachen der Druckbegrenzungsfunktion überschritten wird. Wenn sich die auf den Schließkörper des Sitzventils einwirkenden hydraulischen Kräfte vermindern, bewegt sich der Stößel mit dem Schließkörper aufgrund der Federkraft der Druckfeder im Anker in Richtung auf den Ventilsitz und wird in den Durchflußquerschnitt des Sitzventils mehr oder weniger stark verringernde Längsschwingungen versetzt, bevor es zum Schließen des Sitzventils kommt. Hierdurch entstehen störende Strömungsgeräusche.

### Vorteile der Erfindung

Das erfindungsgemäße Absperrventil mit den Merkmalen des Patentanspruchs 1 hat demgegenüber den Vorteil, daß aufgrund der Hubbeschränkung des Stößels beim druckbegrenzenden Öffnen des Sitzventils ein "Überhub" des Stößels vermieden und beim Schließen des Sitzventils aus der Druckbegrenzungsfunktion heraus der Stößel schwingungsfrei in die Schließstellung bewegt wird. Dies dürfte darin zu suchen sein, daß die Hubbeschränkung des Stößels weitgehend stabile Strömungsverhältnisse am Schließkörper zur Folge hat, welche das Entstehen von Längsschwingungen bei sich vermindernden hydraulischen Kräften vermeidet.

Durch die in den Unteransprüchen aufgeführten Maßnahmen sind vorteilhafte Weiterbildungen und Verbesserungen des im Patentanspruch 1 angegebenen Absperrventils erzielt.

Von der Funktion und der konstruktiven Gestaltung des Absperrventils her sind die in den Ansprüchen 2 und 3 offenbarten Maßnahmen aufgrund ihrer einfachen Gestaltung, der kostenmäßig günstigen Herstellung und Montage der betroffenen Einzelteile des Ventils von erheblichem Vorteil.

Da der Stößel unter Zwischenanordnung des Stützkörpers wirkungsmäßig mit der innerhalb des Ankers angeordneten Druckfeder zusammenarbeitet, ist die im Anspruch 4 gekennzeichnete Ausgestaltung des Stützkörpes vorteilhaft, weil hierdurch der Stößel mit einer ebenen Stirnfläche versehen werden kann, was seine Herstellung verbilligt.

Mit der im Anspruch 5 angegebenen Abstimmung der Bauteile des Absperrventils wird eine Lehre vermittelt, mit der die vorstehend beschriebene Funktionsweise zur Druckbegrenzung sichergestellt ist.

### Zeichnungen

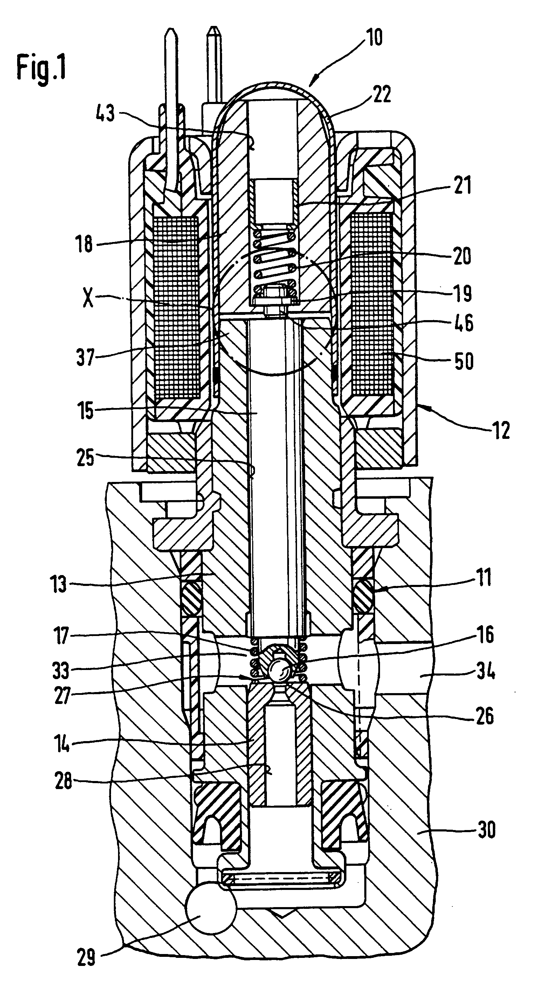

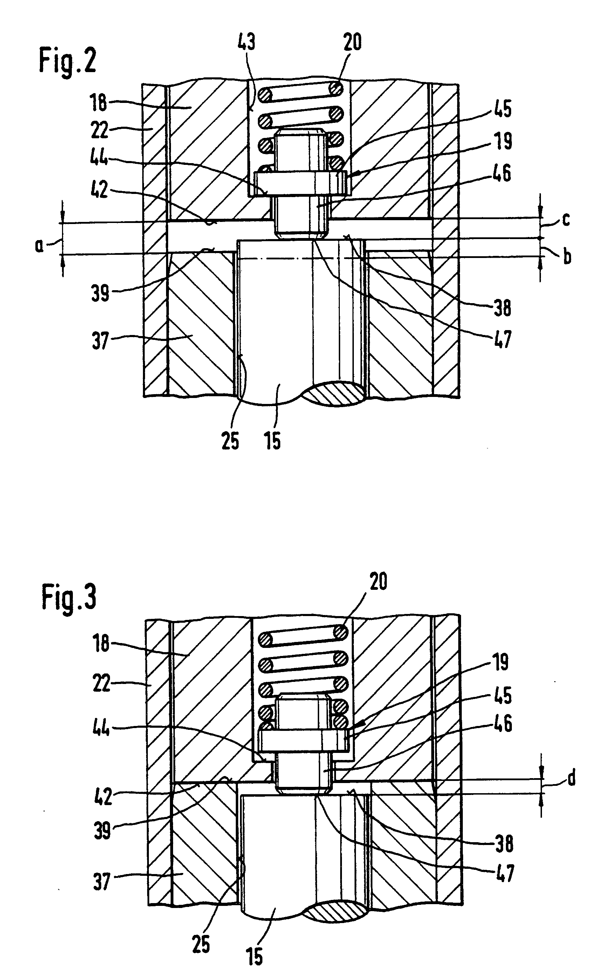

Ein Ausführungsbeispiel der Erfindung ist in den Zeichnungen vereinfacht dargestellt und in der nachfolgenden Beschreibung näher erläutert. Es zeigen Figur 1 einen Längsschnitt durch ein Absperrventil mit Druckbegrenzungsfunktion, Figur 2 als Einzelheit X aus Figur 1 einen Bereich des Absperrventils mit Anker, Polkern und Stößel in größerem Maßstab und Figur 3 eine Darstellung des Ventilbereichs entsprechend Figur 2 mit am Polkern angreifendem Anker.

### Beschreibung des Ausführungsbeispiels

Ein in Figur 1 mit 10 bezeichnetes Absperrventil mit Druckbegrenzungsfunktion besteht aus den beiden Baugruppen Hydraulikgruppe 11 und Magnetgruppe 12. Die Hydraulikgruppe 11 weist im wesentlichen folgende Bauteile auf: ein Ventilgehäuse 13 mit einem Ventilkörper 14, einen Stößel 15 mit einem Schließkörper 16, eine Rückstellfeder 17, einen Anker 18 mit einem Stützkörper 19, einer Druckfeder 20 und einer Einpreßbuchse 21 sowie eine Ankerführungshülse 22.

Das Ventilgehäuse 13 besitzt eine durchgehende Längsbohrung 25, in welche ankerabgewandt der Ventilkörper 14 eingepreßt ist. Der Ventilkörper 14 hat einen dem Schließkörper 16 des Ankers 18 zugeordneten hohlkegelförmigen Ventilsitz 26. Der Schließkörper 16 und der Ventilsitz 26 bilden ein stromlos offenes Sitzventil 27 des Absperrventils 10. Der Ventilsitz 26 steht durch eine Stufenbohrung 28 des Ventilkörpers 14 mit einer Druckmittelleitung 29 eines Ventilblocks 30 in Verbindung, in welchem die Hydraulikgruppe 11 befestigt ist.

Der kugelförmige Schließkörper 16 ist in den ankerabgewandten, kegelförmig verjüngten Endabschnitt des Stößels 15 eingestemmt. Schließkörperseitig ist im Ventilgehäuse 13 eine Ventilkammer 33 ausgebildet, welche mit einer Druckmittelleitung 34 des Ventilblocks 30 in Verbindung steht. In der Ventilkammer 33 befindet sich außerdem die Rückstellfeder 17, welche einerseits am Ventilkörper 14 und andererseits am Stößel 15 angreift und das Sitzventil 27 in seiner Offenstellung hält.

Der Stößel 15 hat, abgesehen von seinem schließkörperseitigen Endabschnitt, einen gleichmäßigen Querschnitt gleichbleibenden Durchmessers. Der in der Längsbohrung 25 geführte Stößel 15 erstreckt sich in einen als Polkern 37 wirkenden Abschnitt des Ventilgehäuses 13 und schließt mit seiner Stirnfläche 38 in der Ventiloffenstellung um ein gewisses Maß über der ankerseitigen Stirnfläche 39 des Polkerns 37 ab (Figur 2).

Die gleichachsig zum Ventilgehäuse 13 und Stößel 15 angeordnete Ankerführungshülse 22 ist auf den Polkern 37 umfangsseitig aufgeschoben und mit diesem dicht verschweißt. Der Anker 18 ist in der Ankerführungshülse 22 angeordnet und nimmt mit seiner stößel- bzw. polkernseitigen Stirnfläche 42 einen gewissen Abstand zur Stirnfläche 39 des Polkerns 37 ein. Der Anker 18 hat eine durchgehende Längsbohrung 43 mit einer polkernseitigen, den Längsbohrungsquerschnitt verengenden Stufe 44. An dieser Stufe 44 ist der in der Längsbohrung 43 aufgenommene Stützkörper 19 mit einem Bund 45 abgestützt. An der stufenabgewandten Seite des Stützkörperbundes 45 greift die ebenfalls in der Ankerlängsbohrung 43 aufgenommene Druckfeder 20 an. Diese ist mittels der in die Ankerlängsbohrung 43 eingepreßten Buchse 21 vorgespannt. Der Stützkörper 19 hat einen von seinem Bund 45 ausgehenden Zapfen 46, welcher um ein gewisses Maß über die Ankerstirnfläche 42 hervorsteht und mit seiner Stirnfläche 47 an der Stirnfläche 38 des Stößels 15 angreift.

Die Magnetgruppe 12 umschließt die Hyddraulikgruppe 11 im Bereich von Polkern 37 und Anker 18. Die Magnetgruppe 12 besitzt eine elektrische Wicklung 50, mit deren Bestromung eine gegen den Polkern 37 gerichtete Magnetkraft auf den Anker 18 erzeugbar ist.

Das Absperrventil 10 mit Druckbegrenzungsfunktion ist in schlupfgeregelten hydraulischen Bremsanlagen von Kraftfahrzeugen verwendbar. Eine derartige Bremsanlage ist in der eingangs erwähnten Druckschrift DE 40 41 506 C2 in Figur 1 teilweise wiedergegeben. Das Absperrventil 10 ist in einem solchen Anwendungsfall über die Druckmittelleitung 34 mit einem Hauptbremszylinder und über die Druckmittelleitung 29 mit wenigstens einem Radbremszylinder und einer Hochdruckpumpe der Bremsanlage verbunden. Bei unbestromter, d.h. nicht erregter elektrischer Wicklung 50 des Absperrventils 10 nimmt, wie bereits erwähnt, das Sitzventil 27 seine Offenstellung ein, in welcher die Druckmittelleitungen 29 und 34 hydraulisch verbunden sind. Bei bestromter, d.h. erregter elektrischer Wicklung 50 ist das Sitzventil 27 in die Ventilschließstellung überführt, in welcher die Druckmittelleitungen 29 und 34 hydraulisch getrennt sind. In der Ventilschließstellung vermag das Absperrventil 10 eine Druckbegrenzungsfunktion zu erfüllen. Zu diesem Zweck sind der Stößel 15, der Anker 18, der Stützkörper 19 und der Polkern 37 hinsichtlich ihrer axialen Zuordnung wie folgt aufeinander abgestimmt:

Bei nichterregter Wicklung 50 nehmen die vorstehend erwähnten Bauteile Stößel 15, Anker 18, Stützkörper 19 und Polkern 37 des Absperrventils 10 die in Figur 2 wiedergegebene Stellung ein. Dabei ist der Anker 18 aufgrund der Federkraft der Rückstellfeder 17 über den Stößel 15, den Stützkörper 19, die Druckfeder 20 und die Einpreßbuchse 21 im polkernabgewandten Bereich an der Ankerführungshülse 22 abgestützt. Da die Vorspannung der Druckfeder 20 sehr viel größer ist als die Kraft der Rückstellfeder 17, befindet sich in dieser Stellung des Ankers 18 der Stützkörperbund 45 in Anlage an der Stufe 44 der Ankerlängsbohrung 43. Dabei nehmen die Stirnfläche 42 des Ankers 18 und die Stirnfläche 39 des Polkerns 37 einen in Figur 2 als Ankerhub a gekennzeichneten Abstand voneinander ein.

Durch Erregen der elektrischen Wicklung 50 ist der Anker 18 unter Überwindung des Ankerhubes a in die in Figur 3 wiedergegebene Stellung überführbar, in welcher der Anker 18 am Polkern 37 abgestützt ist. Der Ankerhub a ist größer als der Ventilhub b, d.h. der Hub, den Stößel 15 und Schließkörper 16 aus der Ventiloffenstellung heraus zum Erreichen der Ventilschließstellung zurücklegen, in welcher der Schließkörper 16 am Ventilsitz 26 angreift. Die dabei auftretende axiale Verlagerung der Stirnfläche 38 des Stößels 15 ist in Figur 2 strichpunktiert angedeutet; in Figur 3 ist die bei erregter Wicklung 50 vom Stößel 15 ankerseitig eingenommene Stellung wiedergegeben.

In der Ventiloffenstellung, also bei nicht erregter Wicklung 50, steht der Stützkörperzapfen 46 mit seiner Stirnfläche 47 über die Stirnfläche 42 des Ankers 18 um ein Maß hervor, welches in Figur 2 mit c gekennzeichnet ist. Das Vorstehmaß c ist kleiner als der Ankerhub a. Dieser wiederum ist kleiner als die Summe aus Ventilhub b und dem bei nicht erregter Wicklung 50 gegebenen Vorstehmaß c.

Das Vorstehmaß c erfährt beim Schließvorgang des Sitzventils 27 eine Verringerung dadurch, daß während der Bewegung des Ankers 18 gegen den Polkern 37 nach der Überwindung des Ventilhubes b die auf den Anker wirkende Magnetkraft die Vorspannkraft der Druckfeder 20 überwindet und der Stützkörper 19 vom Stößel 15 in den Anker zurückgedrängt wird. Das derart reduzierte Vorstehmaß des Stützkörperzapfens 46 ist bei in Figur 3 dargestelltem Angriff des Ankers 18 am Polkern 37 zugleich der beschränkte Stößelhub d, um welchen der Schließkörper 16 und der Stößel 15 aus der Ventilschließstellung heraus entgegen der Kraft der Druckfeder 20 bewegbar sind, um die Druckbegrenzungsfunktion des Absperrventils 10 zu erfüllen. Erfindungsgemäß ist der Hub d des Stößels 15 relativ zum am Polkern 37 angreifenden Anker 18 auf ein Maß kleiner dem Ventilhub b beschränkt.

Die Druckbegrenzungsfunktion des Absperrventils 10 wird in folgender Weise erzielt:

Bei einer Antriebsschlupfregelung der Bremsanlage wird von der Hochdruckpumpe Druckmittel mit einem Druck gefördert, der sehr viel höher ist als der bei geschlossenem Sitzventil 27 in der Ventilkammer 33 herrschende Druck. Überwindet die vom Differenzdruck hervorgerufene, ventilsitzseitig auf den Schließkörper 16 wirkende hydraulische Kraft die von der Vorspannkraft der Druckfeder 20 erzeugte Gegenkraft, so wird, unterstützt von der Rückstellfeder 17, der Stößel um den beschränkten Stößelhub d bis zum Anschlag am Anker 18 zurückgedrängt und Druckmittel von der Druckmittelleitung 29 zur Druckmittelleitung 34 abgesteuert. Ein unzulässig hoher Druckanstieg seitens der Hochdruckpumpe wird dadurch in der Bremsanlage vermieden. Mit Nachlassen des Differenzdrucks überwiegt die ankerseitig von der Druckfeder 20 erzeugte Gegenkraft auf den Stößel 15 und überführt das Sitzventil 27 wieder in seine Schließstellung.

Beim Beenden der Bestromung der elektrischen Wicklung 50 kehren der Stößel 15, der Anker 18 und der Stützkörper 19 in ihre in Figur 2 wiedergegebene Stellung zurück, in welcher das Sitzventil 27 seine Offenstellung einnimmt.

Beim beschriebenen Ausführungsbeispiel sind der Stößel 15, der Anker 18 und der Polkern 37 in fertigungstechnisch günstiger Weise mit ebenen, radial zu ihrer Längsachse verlaufenden Stirnflächen 38 bzw. 42 bzw. 39 versehen. Da der Stößel 15 stirnseitig einen größeren Durchmesser als der Zapfen 46 des Stützkörpers 19 hat, dient die Stirnfläche 42 des Ankers 18 als Anschlag für den Stößel 15 in der Druckbegrenzungsfunktion des Absperrventils 10. Anstelle des über die stößelseitige Stirnfläche 42 des Ankers 18 hervorstehenden Stützkörperzapfens 46, an dem beim Ausführungsbeispiel der Stößel 15 mit seiner Stirnfläche 38 angreift, kann in Abwandlung des Ausführungsbeispiels der Zapfen 46 am Stößel 15 angeformt sein. Bei dieser Abwandlung genügt es, den Stützkörper 19 lediglich als eine dem Stützkörperbund 45 entsprechende Scheibe auszubilden, an welcher der mit dem Stößel 15 vereinigte Zapfen 46 angreift.

## Patentansprüche

1. Absperrventil (10) mit Druckbegrenzungsfunktion, insbesondere für schlupfgeregelte hydraulische Bremsanlagen von Kraftfahrzeugen
mit einem durch Erregen einer elektrischen Wicklung (50) gegen einen Polkern (37) längsbewegbaren Anker (18),
mit einer vorgespannten Druckfeder (20) in einer Längsbohrung (43) des Ankers (18),
mit einem von der Druckfeder (20) belasteten Stützkörper (19), der an einer Stufe (44) der Ankerlängsbohrung (43) abgestützt ist,
mit einem im Polkern (37) längsgeführten, am Stützkörper (19) angreifenden Stößel (15), welcher ankerabgewandt einen Schließkörper (16) eines Sitzventils (27) trägt und relativ zum Anker (18) bewegbar ist,
und mit einem Ventilsitz (26) des Sitzventils (27), gegen den bei erregter Wicklung (50) der Schließkörper (16) durch mittelbaren Angriff des Ankers (18) am Stößel (15) unter Überwindung eines Ventilhubs (b) bewegbar ist und von dem bei erregter Wicklung (50) der Schließkörper (16) durch ventilsitzseitig auf diesen wirkende hydraulische Kräfte entgegen der Federkraft der Druckfeder (20) im Anker (18) abhebbar ist, **dadurch gekennzeichnet, daß**
der Hub (d) des Stößels (15) relativ zum am Polkern (37) angreifenden Anker (18) aufgrund von am Schließkörper (16) wirkenden hydraulischen Kräften auf ein Maß kleiner dem Ventilhub (b) beschränkt ist.

2. Absperrventil nach Anspruch 1, **dadurch gekennzeichnet, daß** der Hub (d) des Stößels (15) durch einen Anschlag am Anker (18) begrenzt ist.

3. Absperrventil nach Anspruch 2, **dadurch gekennzeichnet, daß** der Anschlag die stößelseitige Stirnfläche (42) des Ankers (18) ist.

4. Absperrventil nach Anspruch 3, **dadurch gekennzeichnet, daß** der Stützkörper (19) einen über die stößelseitige Stirnfläche (42) des Ankers (18) hervorstehenden Zapfen (46) hat, an dem der Stößel (15) mit einer Stirnfläche (38) angreift.

5. Absperrventil nach Anspruch 4, **dadurch gekennzeichnet, daß** der Hub (a) des Ankers (18) gegen den Polkern (37) kleiner ist als die Summe aus Ventilhub (b) und einem bei nicht erregter Wicklung (50) gegebenem Vorstehmaß (c) des Stützkörperzapfens (46) über die stößelseitige Ankerstirnfläche (42).

## Claims

1. Shut-off valve (10) having a pressure-limiting function, in particular for anti-slip controlled hydraulic brake systems of motor vehicles,
having an armature (18) which can be moved longitudinally towards a pole core (37) by exciting an electric coil (50),
having a prestressed compression spring (20) in a longitudinal hole (43) of the armature (18),
having a supporting body (19) which is loaded by the compression spring (20) and is supported on a step (44) of the longitudinal hole (43) of the armature, having a tappet (15) which is guided longitudinally in the pole core (37), engages on the supporting body (19) and, facing away from the armature, bears a closing body (16) of a seat valve (27) and can be moved relative to the armature (18),
and having a valve seat (26) of the seat valve (27) towards which, when the coil (50) is excited, the closing body (16) can be moved by indirect engagement of the armature (18) on the tappet (15) by overcoming a valve stroke (b), and from which, when the coil (50) is not excited, the closing body (16) can be lifted by hydraulic forces acting on it on the valve-seat side counter to the spring force of the compression spring (20) in the armature (18), **characterized in that**
the stroke (d) of the tappet (15) relative to the armature (18) engaging on the pole core (37) is limited to an amount smaller than the valve stroke (b) owing to the hydraulic forces acting on the closing body (16).

2. Shut-off valve according to Claim 1, **characterized in that** the stroke (d) of the tappet (15) is limited by a stop on the armature (18).

3. Shut-off valve according to Claim 2, **characterized in that** the stop is the tappet-side end surface (42) of the armature (18).

4. Shut-off valve according to Claim 3, **characterized in that** the supporting body (19) has a pin (46) which protrudes over the tappet-side end surface (42) of the armature (18) and on which the tappet (15) engages by means of an end surface (38).

5. Shut-off valve according to Claim 4, **characterized in that** the stroke (a) of the armature (18) towards the pole core (37) is smaller than the sum of the valve stroke (b) and an amount (c), which arises when the coil (50) is not excited, by which the supporting-body pin (46) protrudes over the tappet-side armature end surface (42).

## Revendications

1. Soupape d'arrêt (10) ayant une fonction de limitation de pression notamment pour des systèmes de freinage hydraulique à régulation de patinage équipant des véhicules automobiles comprenant :
- un induit (18) mobile longitudinalement par rapport à un noyau polaire (37) par l'excitation d'un enroulement électrique (50),
- un ressort de compression précontraint (20) logé dans un perçage longitudinal (43) de l'induit (18),
- un organe de support (19) sollicité par le ressort de compression (20), cet organe étant appuyé contre un épaulement (44) du perçage longitudinal (43) de l'induit,
- un poussoir (15) guidé longitudinalement dans le noyau polaire (37), agissant sur l'organe d'appui (19), et qui porte du côté opposé à l'induit, un organe d'obturation (16) d'une soupape à siège (27), en étant mobile par rapport à l'induit (18), et
- un siège de soupape (26) pour la soupape (27) contre lequel, lorsque l'enroulement (50) est excité, l'organe d'obturation (16) est déplacé par une application indirecte de l'induit (18) contre le poussoir (15) en dépassant une course de soupape (b), alors que, lorsque l'enroulement (50) est excité, l'organe d'obturation (16) peut être soulevé par les forces hydrauliques agissant du côté du siège de soupape, contre la force développée par le ressort de compression (20) dans l'induit (18),
**caractérisée en ce que**
la course (d) du poussoir (15) par rapport à l'induit (18) appliqué contre le noyau polaire (37), est limitée du fait des forces hydrauliques agissant sur l'organe d'obturation (16) à une mesure inférieure à la course de soupape (b).

2. Soupape d'arrêt selon la revendication 1,
**caractérisée en ce que**
la course (d) du poussoir (15) est limitée par une butée contre l'induit (18).

3. Soupape d'arrêt selon la revendication 2,
**caractérisée en ce que**
la butée est la surface frontale (42) de l'induit (18) du côté du poussoir.

4. Soupape d'arrêt selon la revendication 3,
**caractérisée en ce que**
l'organe d'appui (19) possède un prolongement (46) qui dépasse par rapport à la surface frontale (42) de l'induit (18) du côté du poussoir, et le poussoir (15) agit contre le prolongement (46) par sa surface frontale (38).

5. Soupape d'arrêt selon la revendication 4,
**caractérisée en ce que**
la course (a) de l'induit (18) contre le noyau polaire (37) est inférieure à la somme de la course de soupape (b) et d'une longueur en saillie (c) du prolongement du corps d'appui (46), lorsque l'enroulement (50) n'est pas excité, par rapport à la surface frontale (42) de l'induit, du côté du poussoir.
